Europäisches Patentamt

European Patent Office

Office européen des brevets

(19)

(11) Numéro de publication: **0 229 571
B1**

(12) **FASCICULE DE BREVET EUROPEEN**

(45) Date de publication du fascicule du brevet:
**14.11.90**

(51) Int. Cl.⁵: **C03C 3/32**

(21) Numéro de dépôt: **86402946.7**

(22) Date de dépôt: **26.12.86**

(54) **Nouveaux verres fluorés à base d'indium et leur préparation.**

(30) Priorité: **27.12.85 FR 8519309**

(43) Date de publication de la demande:
**22.07.87 Bulletin 87/30**

(45) Mention de la délivrance du brevet:
**14.11.90 Bulletin 90/46**

(84) Etats contractants désignés:
**AT BE CH DE ES GB GR IT LI LU NL SE**

(56) Documents cités:
**FR-A- 2 521 546
FR-A- 2 549 818**

**GLASS TECHNOLOGY,
vol. 24, no. 3, juin 1983, pages 164-167, Huddersfield,
GB; C. JACOBONI et al.: "Fluoride glasses of 3d
transition metals"
CHEMICAL ABSTRACTS,
vol. 102, no. 26, juillet 1985, page 260, résumé
no. 224806e, Columbus, Ohio, US; N. AURIAULT et al.:
"New fluoride glasses in the AF2-MF2-MF3 system", &
MATER. RES. BULL. 1985, 20(3), 309-14
CHEMICAL ABSTRACTS,
vol. 99, no. 10, 1983, page 283, résumé no. 75524b,
Columbus, Ohio, US; M.G. DREXHAGE et al.:
"Comparative study of barium fluoride/thorium fluoride**

(73) Titulaire: **CENTRE NATIONAL DE LA RECHERCHE
SCIENTIFIQUE (CNRS), 15, Quai Anatole France,
F-75007 Paris(FR)**

(72) Inventeur: **Lucas, Jacques, 34, rue du Parc,
F-35830 Betton(FR)**
Inventeur: **Fonteneau, Gilles Hilaire Marie, 19, rue de
Chateaugiron, Nouvoltou F-35410 Chateaugiron(FR)**
Inventeur: **Bouaggad, Abdelmajid, 11b, rue du Bois
Perrin, 204, F-35700 Rennes(FR)**

(74) Mandataire: **Tonnellier, Jean-Claude et al, Cabinet Nony
& Cie. 29, rue Cambacérès, F-75008 Paris(FR)**

(56) Documents cités: (suite)
**glasses containing yttrium fluoride, ytterbium(III)
fluoride, and lutetium fluoride", & J. NON-CRYST.
SOLIDS 1983, 56(1-3), 51-6 000**

**Description**

La présente invention a pour objet de nouveaux verres fluorés à base d'indium ainsi que leur procédé de préparation.

On sait que le développement des applications de l'infra-rouge a provoqué la recherches de nouveaux matériaux transparents dans ce domaine de longueurs d'ondes et en particulier sous forme de verres, compte tenu de leur facilité de mise en forme et de préparation, par rapport aux dérivés cristallins.

On a décrit, dans ce but, différentes classes de verres à base de fluorure métallique qui sont généralement désignées sous l'appellation de "verres fluorés".

L'intérêt des verres fluorés pour la transmission de l'infra-rouge est bien connu mais, jusqu'à présent, ces verres n'ont pas trouvé d'application industrielle en raison de la difficulté de préparation de pièces vitreuses massives et homogènes. Seuls font exception les verres à base de fluorure de zirconium qui ont été décrits dans les demandes de brevet français no 76.18 878 et no 77.09 618 (no. de publication 2 354 977 et 2 384 724).

L'intérêt potentiel des verres fluorés à base d'indium a été mentionné par J.J. VIDEAU et Coll., C.R. Acad. Sc. Paris, t. 297, pages 483–485 (1983). Toutefois, les compositions mentionnées par ces auteurs ne semblent pas susceptibles d'être utilisées industriellement car des essais de reproduction dans les conditions décrites par exemple avec la composition (32% $BaF_2$, 17% $YF_3$, 11% $PbF_2$, 40% $InF_3$), n'ont pas permis d'obtenir des échantillons vitreux homogènes.

Dans la demande de brevet français 80.06 088 (no publication 2 478 618), diverses considérations théoriques sur les compositions susceptibles de donner des verres fluorés ont été énoncées. Ces considérations semblent toutefois discutables ou incomplètes, puisque certaines compositions mentionnées dans cette demande de brevet français, en particulier la composition contenant de l'indium, ne donnent pas des verres, même après une trempe énergique, mais des mélanges de verre et de céramique.

L'article de C. Jacoboni et al., Glass Technology, vol. 24, No 3, 164–167 (1983) décrit certains verres fluorés à base de métaux de transition 3d, notamment des verres fluorés à base de gallium, plomb de manganèse pouvant contenir en outre de faibles proportions d'uranium et d'yttrium. De tels verres ont des vitesses de cristallisation relativement élevées, ce qui nécessite de les refroidir rapidement. Dans ces conditions, ces verres ne permettent pas d'obtenir des pièces ayant plus de quelques millimètres d'épaisseur.

Il était donc souhaitable de rechercher de nouvelles compositions à base de fluorure d'indium et/ou de gallium permettant d'obtenir, dans des conditions acceptables, des pièces massives ou des fibres optiques.

La présente invention a pour objet de nouvelles compositions de verres fluorés à base d'indium et/ou de gallium qui possèdent les deux qualités techniques souhaitées pour une verre fluoré:

a) une faible vitesse de cristallisation permettant l'obtention de pièces d'épaisseur importante et permettant le fibrage à partir de préformes;

b) un large domaine de transmission de l'infra-rouge, supérieur à celui des verres à base de zirconium: 0,3–6,5 micromètres pour les verres à base de zirconium contre 0,2–8 micromètres pour les verres de la présente invention.

La présente invention a donc pour objet des verres fluorés caractérisés par le fait qu'ils sont constitués par une composition contenant au moins un fluorure métallique de chacune des cinq catégories suivantes:

| FLUORURES | PROPORTIONS MOLAIRES (%) |
|---|---|
| $M^1F_3$ | u |
| $M^2F_4$ | v |
| $M^3F_2$ | w |
| $M^4F_3$ | x |
| $M^5F_2$ | y |

$M^1$ représentant In ou Ga
$M^2$ représentant Th ou U
$M^3$ représentant Ba ou Pb
$M^4$ représentant Y, Yb ou Lu
$M^5$ représentant Zn ou Mn

avec
u = 25–35
v = 5–12
w = 25–35
x = 5–12
y = 15–30
et éventuellement un adjuvant ou dopant, constitué par au moins un fluorure autre que les fluorures métalliques mentionnés ci-dessus, à un pourcentage molaire z, avec z = 0–4, étant entendu que la somme (u + v + w + x + y + z) est égale à 100, ladite composition étant capable de donner, par coulée à l'état fondu puis refroidissement, des pièces de verre d'épaisseur supérieure à 10 mm (ayant par exemple une épaisseur de 10 à 25 mm).

La fonction des adjuvants ou dopants est à la fois de favoriser la stabilisation des verres par augmentation du désordre des ions, et éventuellement de faire dans certaines limites les propriétés du verre de base.

Les adjuvants ou dopants peuvent être constitués pratiquement par tout fluorure autre que les fluorures métalliques mentionnés dans la définition des verres de l'invention.

On citera en particulier les fluorures de métaux alcalins (Li Na K Rb Cs), les fluorures de métaux $M^{II}$ $F_2$ avec $M^{II}$ = Ca Sr Ni Co V Fe Cr Cu, etc... ou les fluorures $M^{III}$ $F_3$, avec $M^{III}$ = Fe Cr Co Ti V Bi, etc...

Parmi les verres de l'invention, on citera en particulier les verres conformes à la définition ci-dessus, caractérisés par le fait qu'ils contiennent des quantités non nulles de fluorures d'indium, de thorium et de baryum, avec des pourcentages molaires respectifs m, p et q, et qu'ils contiennent éventuellement des fluorures de gallium, d'uranium et/ou de plomb avec des pourcentages molaires respectifs r, s et t pouvant être nuls et tels que le rapport
r/(m+r) soit inférieur ou égal à 0,2;
s/(p+s) soit inférieur ou égal à 0,2;
et t/(q+t) soit inférieur ou égal à 0,5;
avec
m+r = 25-35
p+s = 5-12
et q+t = 25-35,
étant entendu que pour ces verres la somme (m+p+q+r+s+t+x+y+z) est égale à 100.

On mentionnera notamment les verres caractérisés par le fait qu'ils sont constitués par :

| CONSTITUANTS | PROPORTIONS MOLAIRES |
|---|---|
| $InF_3$ | 25–35 |
| $ThF_4$ | 5–12 |
| $BaF_2$ | 25–35 |
| $M^4 F_3$ | 5–12 |
| $M^5 F_2$ | 15–30 |
| Adjuvant | 0–4 |

$M^4$ et $M^5$ étant définis comme précédemment, étant entendu que la somme des proportions molaires des constituants est égale à 100.

L'invention concerne notamment les verres particuliers décrits ci-après dans la partie expérimentale.

L'invention a également pour objet un procédé de préparation des verres tels que définis ci-dessus.

Ce procédé est principalement caractérisé par le fait que l'on mélange les fluorures constituants, ou les oxydes correspondants, avec, dans ce dernier cas, la quantité nécessaire d'un agent fluorant permettant de transformer les oxydes en fluorures, que l'on fait fondre le mélange de fluorure sous atmosphère neutre et sèche puis que l'on refroidit la compositions liquide obtenue selon les méthodes usuelles pour lui donner la forme désirée.

Le mélange de fluorures est généralement fondu et homogénéisé à une température voisine de 700 - 780°C. Ensuite, la température est abaissée par exemple vers 600 - 680°C, température à laquelle le verre est ensuite coulé.

Selon un mode d'éxécution particulier, le bain fondu est coulé dans un moule, par exemple un moule de laiton.

Le moule de laiton est de préférence préalablement chauffé à une température inférieure à la température de cristallisation du verre obtenu, en particulier à une température inférieure par exemple d'environ 140°C à cette température de cristallisation.

La composition liquide peut également être coulée dans un moule cylindrique pour donner une préforme qui peut ensuite être étirée en fibres selon les méthodes connues.

On peut également introduire concentriquement la préforme obtenue dans un moule cylindrique de diamètre supérieur au diamètre de la préforme puis couler dans le moule autour du cylindre de verre un autre verre de l'invention ayant un indice différent, inférieur à l'indice du verre de coeur.

Après solidification, la préforme composite obtenue peut être démoulée et recuite par exemple vers 300°C. Elle peut ensuite être étirée en fibres selon les méthodes connues.

Par coulage sur un disque de laiton, il est possible d'obtenir avec les compositions de l'invention, des compositions vitreuses homogènes ayant plusieurs dizaines de centimètres de diamètre et une épaisseur de 10 à 20mm.

Les fluorures métalliques utilisés comme produit de départ sont pour certains des produits commerciaux. Les autres peuvent être obtenus selon les méthodes connues, notamment au départ des oxydes correspondants à l'aide d'agents fluorants appropriés, par exemple le bi-fluorure d'ammonium $NH_5F_2$.

L'invention a également pour objet des pièces moulées ou taillées ou des fibres optiques, réalisées avec un verre tel que défini ci-dessus.

Les exemples suivants illustrent l'invention sans toutefois la limiter.

Exemple 1

On mélange les halogénures suivants dans les proportions indiquées ci-dessous :

| CONSTITUANTS | % EN MOLES |
|---|---|
| $BaF_2$ | 30 |
| $ThF_4$ | 10 |
| $YbF_3$ | 10 |
| $ZnF_2$ | 20 |
| $InF_3$ | 30 |

On chauffe le mélange à une température de 700°C en atmosphère neutre et sèche.

On coule ensuite la compositions liquide dans un moule cylindrique plat en laiton préchauffé à une température de 300°C environ.

On obtient ainsi une composition vitreuse massive homogène ayant une épaisseur de 15mm.

Les caractéristiques du verre obtenu sont les suivantes :

Tg = 324°C
Tc = 447°C
Tf = 610°C
n = 1,51

Exemple 2 à 10

De façon analogue, on a préparé les verres fluorés ayant les compositions (% en moles) et caractéristiques suivantes :

| Ex | BaF$_2$ | ThF$_4$ | YbF$_3$ | ZnF$_2$ | InF$_3$ | Tg°C | Tc°C | Tf°C |
|----|---------|---------|---------|---------|---------|------|------|------|
| 2 | 30 | 10 | 10 | 25 | 25 | 324 | 428 | > 600 |
| 3 | 30 | 05 | 05 | 30 | 30 | 308 | 382 | 638 |
| 4 | 30 | 10 | 05 | 25 | 30 | 318 | 437 | > 620 |
| 5 | 30 | 10 | 05 | 30 | 25 | 315 | 418 | > 620 |
| 6 | 30 | 10 | 10 | 15 | 35 | 328 | 439 | ∼ 600 |
| 7 | 28 | 10 | 10 | 22 | 30 | 325 | 442 | ∼ 600 |
| 8 | 28 | 10 | 12 | 20 | 30 | 326 | 447 | ∼ 600 |
| 9 | 28 | 10 | 10 | 23 | 29 | 321 | 440 | ∼ 600 |
| 10 | 27 | 11 | 09 | 20 | 33 | 324 | 435 | ∼ 605 |

## Exemple 11

De façon analogue, on a préparé un verre ayant la composition suivante (% en moles) : 30 BaF$_2$, 10 ThF$_4$, 10 YbF$_3$, 20 MnF$_2$, 30 InF$_3$.
Les caractéristiques de ce verre sont les suivantes :
Tg = 325°C
Tc = 405°C
Tf = 610°C

## Exemple 12

De façon analogue, on a préparé un verre ayant la composition suivante (% en moles) :
23aF$_2$, 7PbF$_2$, 10ThF$_4$, 10YbF$_3$, 20ZnF$_2$, 30InF$_3$.
Tg = 306°C
Tc = 436°C

## Exemple 13

De façon analogue, on a préparé un verre ayant la composition suivante (% en moles) :
27BaF$_2$, 3PbF$_2$, 10ThF$_4$, 10YbF$_3$, 20ZnF$_2$, 30InF$_3$.
Tg = 316°C
Tc = 416°C

## Exemples 14 à 33

De façon analogue, on a préparé des verres ayant les compositions indiquées dans le tableau suivant.
Dans ce tableau, seuls les constituants métalliques des fluorures ont été indiqués.
Les proportions données sont des % en moles.

| Ex | Ba | In | Th | Y | Yb | Lu | Zn | Mn | Pb | Ga | U | Adjuvant |
|---|---|---|---|---|---|---|---|---|---|---|---|---|
| 14 | 26.5 | 30 | 10 | 12 | | | 18 | | 3.5 | | | |
| 15 | 30 | 30 | 8 | | 10 | | 20 | | | | 2 | |
| 16 | 35 | 30 | 8 | | 10 | | 15 | | | | 2 | |
| 17 | 30 | 25.5 | 10 | | | 10 | 20 | | | 4.5 | | |
| 18 | 30 | 28 | 10 | | | 10 | 20 | | | 2 | | |
| 19 | 30 | 30 | 10 | | 10 | | 10 | 10 | | | | |
| 20 | 30 | 30 | 10 | | 10 | | | 20 | | | | |
| 21 | 24 | 33 | 11 | | 9 | | 20 | | 3 | | | |
| 22 | 30 | 25 | 8.5 | 5 | | | 30 | | | | 1.5 | |
| 23 | 30 | 25 | 8.5 | 5 | | | 20 | 10 | | | 1.5 | |
| 24 | 30 | 30 | 10 | 5 | 5 | | 20 | | | | | |
| 25 | 30 | 30 | 10 | | 5 | 5 | 20 | | | | | |
| 26 | 26 | 30 | 10 | | 10 | | 20 | | 4 | | | |
| 27 | 27 | 25 | 10 | 10 | | | | 20 | 3 | 5 | | |
| 28 | 30 | 30 | 10 | | 5 | | 25 | | | | | |
| 29 | 30 | 30 | 12 | 10 | | | 18 | | | | | |
| 30 | 20 | 33 | 11 | | 9 | | 15 | 5 | 3 | | | |
| 31 | 20 | 33 | 11 | | 9 | | 5 | 15 | 3 | | | Na 4 |
| 32 | 26 | 30 | 8 | | | 10 | 22 | | | | | Na 4 |
| 33 | 18 | 30 | 10 | | 10 | | 20 | | 12 | | | Ca 4 |

## Exemple 34

Exemple de préparation d'une préforme pour fibres optiques.

On coule dans un moule cylindrique ayant 20cm de long et un diamètre de 15mm, la composition de verre de l'exemple 24 fondue à 700°C.

Après solidification par refroidissement, le verre obtenu, sous forme d'un barreau cylindrique, est recuit à 300°C.

Le tube de verre obtenu est ensuite préchauffé en atmosphère neutre et introduit de manière concentrique dans un moule cylindrique en laiton ayant une hauteur de 20cm et un diamètre de 20mm.

L'ensemble est préchauffé à 330°C puis le verre de l'exemple 1, à l'état fondu, est coulé dans le moule autour du cylindre de verre.

Après solidification, la préforme coeur-gaine est démoulée et recuite à 300°C.

Cette préforme peut être ensuite fibrée selon les méthodes connues.

## Revendications

1. Verres fluorés caractérisés par le fait qu'ils sont constitués par une composition contenant au moins un fluorure métallique de chacune des cinq catégories suivantes:

| FLUORURES | PROPORTIONS MOLAIRES (%) |
|---|---|
| $M^1F_3$ | u |
| $M^2F_4$ | v |
| $M^3F_2$ | w |
| $M^4F_3$ | x |
| $M^5F_2$ | y |

$M^1$ représentant In ou Ga
$M^2$ représentant Th ou U

$M^3$ représentant Ba ou Pb
$M^4$ représentant Y, Yb ou Lu
$M^5$ représentant Zn ou Mn
avec
$u = 25–35$
$v = 5–12$
$w = 25–35$
$x = 5–12$
$y = 15–30$

et éventuellement un adjuvant ou dopant, constitué par au moins un fluorure autre que les fluorures métalliques mentionnés ci-dessus, à un pourcentage molaire z, avec $z = 0–4$, étant entendu que la somme $(u + v + w + x + y + z)$ est égale à 100, ladite composition étant capable de donner, par coulée à l'état fondu puis refroidissement, des pièces de verre d'épaisseur supérieure à 10 mm.

2. Verres fluorés selon la revendication 1, caractérisés par le fait qu'ils contiennent des quantités non nulles de fluorures d'indium, de thorium et de baryum, avec des pourcentages molaires respectifs m, p et q, et qu'ils contiennent éventuellement des fluorures de gallium, d'uranium et/ou de plomb qui peuvent être présents avec des pourcentages molaires respectifs r, s et t pouvant être nuls et tels que le rapport
$r/(m + r)$ soit inférieur ou égal à 0,2;
$s/(p + s)$ soit inférieur ou égal à 0,2;
et $t/(q + t)$ soit inférieur ou égal à 0,5;
avec
$m+r = 25-35$
$p+s = 5-12$
et $q+t = 25-35$.
étant entendu que pour ces verres, la somme $(m+p+q+r+s+t+x+y+z)$ est égale à 100.

3. Verres fluorés selon la revendication 1, caractérisés par le fait qu'ils sont constitués par :

| CONSTITUANTS | PROPORTIONS MOLAIRES |
|---|---|
| $InF_3$ | 25-35 |
| $ThF_4$ | 5-12 |
| $BaF_2$ | 25-35 |
| $M^4F_3$ | 5-12 |
| $M^5F_2$ | 15-30 |
| Adjuvant | 0-4 |

étant entendu que la somme des proportions molaires des constituants est égale à 100.

4. Procédé de préparation des verres fluorés tels que définis dans l'une quelconque des revendications précédentes, caractérisé par le fait que l'on mélange les fluorures constituants, ou les oxydes correspondants, avec, dans ce dernier cas, la quantité nécessaire d'un agent fluorant permettant de transformer les oxydes en fluorures, que l'on fait fondre le mélange de fluorure sous atmosphère neutre et sèche puis qu'on refroidit la compositions liquide obtenue selon les méthodes usuelles pour lui donner la forme désirée.

5. Pièces moulées ou taillées, ou fibres optiques réalisées avec un verre tel que défini dans l'une quelconque des revendications 1 à 3.

**Claims**

1. Glasses containing fluorine, characterized by the fact that they consist of a composition containing at least one metallic fluoride from each of the five following categories:

| FLUORIDES | MOLAR PROPORTIONS (%) |
|-----------|----------------------|
| $M^1F_3$ | u |
| $M^2F_4$ | v |
| $M^3F_2$ | w |
| $M^4F_3$ | x |
| $M^5F_2$ | y |

where $M^1$ represents In or Ga
$M^2$ represents Th or U
$M^3$ represents Ba or Pb
$M^4$ represents Y, Yb or Lu
$M^5$ represents Zn or Mn
with
u = 25–35
v = 5–12
w = 25–35
x = 5–12
y = 15–30
and possibly an adjuvant or doping agent consisting of at least one fluoride other than the metallic fluorides mentioned above, at a molar percentage z with z = 0–4, it being understood that the sum (u + v + w + x + y + z) is equal to 100, the said composition being capable of yielding by pouring in the molten state and then cooling, pieces of glass of thickness greater than 10 mm.

2. Glasses containing fluorine as in Claim 1, characterized by the fact that they contain amounts which are not nil, of fluorides of indium, thorium and barium at respective molar percentages m, p and q, and that they possibly contain fluorides of gallium and uranium and/or lead which may be present in respective molar percentages r, s and t which may be nil and such that the ratio
r/(m + r) is less than or equal to 0.2;
s/(p + s) is less than or equal to 0.2;
and t/(q + t) is less than or equal to 0.5;
with m + r = 25–35
p + s = 5–12
and q + t = 25–35,
it being understood that for these glasses the sum (m + p + q + r + s + t + x + y + z) is equal to 100.

3. Glasses containing fluorine as in Claim 1, characterized by the fact that they consist of:

| CONSTITUENTS | MOLAR PROPORTIONS (%) |
|--------------|----------------------|
| $InF_3$ | 25–35 |
| $ThF_4$ | 5–12 |
| $BaF_2$ | 25–35 |
| $M^4F_3$ | 5–12 |
| $M^5F_2$ | 15–30 · |
| Adjuvant | 0–4 |

it being understood that the sum of the molar proportions of the constituents is equal to 100.

4. A method of preparation of the fluorine-containing glasses as defined in any one of the preceding Claims, characterized by the fact that the constituent fluorides or the corresponding oxides are mixed with – in the latter case – the necessary amount of a fluorine-containing agent which enables the oxides to be transformed into fluorides, that the fluoride mixture is made to melt in a neutral and dry atmosphere and then the liquid composition obtained is cooled according to the methods usual for giving it the desired form.

5. Moulded or shaped pieces or optical fibres realized from a glass as defined in any one of the Claims 1 to 3.

## Patentansprüche

1. Fluorhaltige Gläser, dadurch gekennzeichnet, daß sie aus einer Zubereitung bestehen, die mindestens ein Metallfluorid aus einer der folgenden fünf Gruppen enthält:

| Fluorid | Molare Menge (%) |
|---------|------------------|
| $M^1F_3$ | u |
| $M^2F_4$ | v |
| $M^3F_2$ | w |
| $M^4F_3$ | x |
| $M^5F_2$ | y |

wobei
$M^1$ In oder Ga bedeutet
$M^2$ Th oder U bedeutet
$M^3$ Ba oder Pb bedeutet
$M^4$ Y, Yb oder Lu bedeutet
$M^5$ Zn oder Mn bedeutet mit
u = 25–35
v = 5–12
w = 25–35
x = 5–12
Y = 15–30
und gegebenenfalls mindestens einen Hilfsstoff oder Dotiermittel bestehend aus mindestens einem anderen Fluorid als das oben genannte in einer molaren Prozentmenge z mit z = 0–4 enthält, wobei die Summe (u + v + w + x + y + z) gleich 100 ist und daß diese Zubereitung in der Lage ist, beim Umgießen aus dem geschmolzenen Zustand unter nachfolgender Abkühlung Glasstücke von mehr als 10 mm Dicke zu bilden.

2. Fluorhaltige Gläser nach Anspruch 1, dadurch gekennzeichnet, daß sie nicht unerhebliche Mengen von Fluoriden von Indium, Thorium und Barium enthalten mit der entsprechenden molaren Prozentmenge m, p und q, und daß sie gegebenenfalls Fluoride von Gallium, Uran und/oder Blei in den entsprechenden molaren Prozentmengen r, s und t enthalten, die nicht null sein können und welche auch den Beziehungen entsprechen:
r/(m + r) kleiner oder gleich 0,2;
s/(p + s) kleiner oder gleich 0,2;
t/(q + t) kleiner oder gleich 0,5 mit
m + r = 25–35,
p + s = 5–12 und
q + t = 25–35
und der Maßgabe, daß für diese Gläser die Summe (m + p + q + r + s + t + x + y + z) gleich 100 ist.

3. Fluorhaltige Gläser nach Anspruch 1, dadurch gekennzeichnet, daß sie bestehen aus:

| Bestandteile | molare Mengen |
|---|---|
| $InF_3$ | 25 - 35 |
| $ThF_4$ | 5 - 12 |
| $BaF_2$ | 25 - 35 |
| $M_4F_3$ | 5 - 12 |
| $M_5F_2$ | 15 - 30 |
| Hilfsmittel | 0-4 |

mit der Maßgabe, daß die Summe der molaren Menge der Bestandteile gleich 100 ist.

4. Verfahren zur Herstellung der fluorhaltigen Gläser nach einem der vorhergehenden Ansprüche, dadurch gekennzeichnet, daß man die Fluorid-Bestandteile oder die entsprechenden Oxide, im letzteren Fall zusammen mit der notwendigen Menge Fluorierungsmittel, die die Umwandlung der Oxide in Fluoride erlaubt, mischt, daß man das Fluoridgemisch in einer neutralen und trockenen Atmosphäre mischt, schmilzt und danach die erhaltene flüssige Zubereitung nach bekannten Verfahren zur Erzielung der gewünschten Form abkühlt.

5. Gegossene oder geschliffene Teile oder optische Fasern, hergestellt aus einem Glas, wie es in einem der vorhergehenden Ansprüche 1 bis 3 definiert ist.